(19) Europäisches Patentamt
European Patent Office
Office européen des brevets

(11) **EP 3 336 998 B1**

(12) **EUROPÄISCHE PATENTSCHRIFT**

(45) Veröffentlichungstag und Bekanntmachung des Hinweises auf die Patenterteilung:
**23.06.2021 Patentblatt 2021/25**

(21) Anmeldenummer: **17192293.3**

(22) Anmeldetag: **21.09.2017**

(51) Int Cl.:
*H02J 3/32* *(2006.01)*      *H02J 3/38* *(2006.01)*
*H02J 3/46* *(2006.01)*      *H02J 3/24* *(2006.01)*
*H02J 3/40* *(2006.01)*      *H02J 3/48* *(2006.01)*
*H02J 11/00* *(2006.01)*

(54) **NETZERSATZANLAGE, UMRICHTER FÜR EINE NETZERSATZANLAGE SOWIE VERFAHREN ZUM BETREIBEN EINER NETZERSATZANLAGE**

EMERGENCY POWER SYSTEM, CONVERTER FOR AN EMERGENCY POWER SYSTEM AND METHOD FOR OPERATING AN EMERGENCY POWER SYSTEM

INSTALLATION AUXILIAIRE D'ALIMENTATION, CONVERTISSEUR POUR UNE INSTALLATION AUXILIAIRE D'ALIMENTATION AINSI QUE PROCÉDÉ DE FONCTIONNEMENT D'UNE INSTALLATION AUXILIAIRE D'ALIMENTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2016 DE 102016124602**

(43) Veröffentlichungstag der Anmeldung:
**20.06.2018 Patentblatt 2018/25**

(73) Patentinhaber: **innogy SE**
**45128 Essen (DE)**

(72) Erfinder: **Wilch, Michael**
**46238 Bottrop (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A1- 3 096 434        WO-A1-2015/039802
DE-A1-102012 023 426    US-A1- 2016 268 818

• **ALEXANDRE OUDALOV ET AL: "Optimizing a Battery Energy Storage System for Primary Frequency Control", IEEE TRANSACTIONS ON POWER SYSTEMS, IEEE SERVICE CENTER, PISCATAWAY, NJ, US, Bd. 22, Nr. 3, 1. August 2007 (2007-08-01) , Seiten 1259-1266, XP011189268, ISSN: 0885-8950, DOI: 10.1109/TPWRS.2007.901459**

**Beschreibung**

Der Gegenstand betrifft eine Netzersatzanlage, einen Umrichter für eine Netzersatzanlage sowie ein Verfahren zum Betreiben einer Netzersatzanlage.

Netzersatzanlagen sind zum Beispiel aus den Patentanmeldungen WO2015/039802A1, EP 3096434A1 und DE102012023426A1 bekannt. Die EP3096434A1 offenbart eine Netzersatzanlage mit Energiespeichern, wobei zum Betrieb in Abhängigkeit von Leistungsbedarf und Leistungsangebot im Netz sowohl Anhebungen der Netzfrequenz über eine Normfrequenz als auch Absenkungen der Netzfrequenz unter eine Normfrequenz durchgeführt werden.

Bisher werden manche Netzersatzanlagen mit einem Dieselmotor mit daran angeschlossenem Synchrongenerator betrieben. Mit Hilfe des dieselgetriebenen Synchrongenerators ist es möglich, ein Inselnetz unabhängig vom Energieversorger für eine gewisse Zeit betreiben zu können. Insbesondere ist der Betrieb von Niederspannungsnetzen mit Netzersatzanlagen gängig. Dabei werden von dem Synchrongenerator sowohl eine Spannung eingeprägt als auch das Leistungsgleichgewicht erhalten.

Auch bei Inselnetzen kommt es dazu, dass nicht nur elektrische Lasten an das Netz angeschlossen sind, sondern auch elektrische Einspeiser, beispielsweise Fotovoltaikanlagen, Windkraftanlagen, Biomasseanlagen, KWK-Anlagen oder dergleichen.

Durch die Einspeisung elektrischer Leistung durch die Einspeiser kann es dazu kommen, dass ein Leistungsüberangebot in einem Inselnetz entsteht. Da ein Dieselgenerator nicht in der Lage ist, bei elektrischer Rückspeisung aus dem versorgten Inselnetz Leistung aufzunehmen, hat sich bei üblichen Netzersatzanlagen etabliert, die angeschlossenen elektrischen Erzeuger durch eine entsprechende Frequenzregelung abzuschalten. Für den Betrieb einer Netzersatzanlage hat sich daher folgender Prozessablauf etabliert:

A) Synchronisation der Netzersatzanlage mit dem zu versorgenden Niederspannungsnetz.

Bei der Synchronisation der Netzersatzanlage erfolgt eine Angleichung der Frequenz des elektrischen Energieversorgungsnetzes und der Einspeisefrequenz des Synchrongenerators.

B) Übernahme der Leistung durch die Netzersatzanlage.

Die Netzersatzanlage übernimmt die Leistungseinspeisung in dem Inselnetz, so dass das Inselnetz autark betrieben werden könnte.

C) Abschalten der Versorgung aus dem übergeordneten Netz.

Nach der Synchronisation und der Übernahme der elektrischen Leistung durch den Synchrongenerator kann das Inselnetz von dem übergeordneten Energieversorgungsnetz getrennt werden.

D) Die Netzersatzanlage stellt die Frequenz des Inselnetzes auf einen Wert von 51,5 Hz.

In Deutschland ist die Normfrequenz 50 Hz, in den USA ist die Normfrequenz beispielsweise 60 Hz. Bei einer Abweichung von der Normfrequenz nach oben, beispielsweise um 3% oder mehr, schalten elektrischen Erzeuger automatisch ab.

Elektrische Einspeiser, insbesondere die oben genannten, reagieren auf Frequenzschwankungen in dem versorgten Netz entsprechend einer Einspeisekennlinie P(f). Die Einspeiseleistung ist dabei abhängig von der Netzfrequenz. Insbesondere wird die Einspeiseleistung zwischen einer Netzfrequenz von 50,2 Hz und 51,5 Hz reduziert. Insbesondere erfolgt die Absenkung der Leistung entlang einer Absenkungskurve mit Steigung m von m=0,4 $P_M$/ Hz, wobei $P_M$ die maximale Einspeiseleistung ist.

Die Abschaltung der Einspeiser aufgrund von Überfrequenz folgt dabei vorzugsweise einer Hysterese-Kennlinie, so dass wenn der Einspeiser einmal vollständig abgeschaltet wurde, dieser nicht unmittelbar wieder eingeschaltet wird, wenn die Frequenz unter beispielsweise 51,5 Hz absinkt. Insbesondere bleibt gemäß der Netzanschlussrichtlinie die Abschaltung der Einspeiser bis zu einer unteren Frequenz von 50,2 Hz bestehen.

E) Die Netzersatzanlage reduziert die Frequenz des Inselnetzes auf ≥50,2 Hz.

Wie erwähnt, bleiben die Einspeiser abgeschaltet und die Frequenzdifferenz zu der Normfrequenz ist minimiert.

Mit Hilfe der oben beschriebenen Betriebsweise wird sichergestellt, dass das Inselnetz über die dieselbetriebene Netzersatzanlage sicher versorgt werden kann. Es wird sichergestellt, dass im Inselbetrieb eine reine Last versorgt wird und keine Rückspeisung aus dem Inselnetz erfolgt. Diese Betriebsweise führt jedoch zu einem maximalen Verbrauch an Treibstoff für den Generator, da die Einspeiseleistung der an das Netz angeschlossenen Einspeiser auf 0 W reduziert wird. Dies hat den Nachteil, dass die Betriebskosten sehr hoch sind, der Verschleiß erhöht ist und auch der $CO_2$ Ausstoß erhöht ist.

Somit lag dem Gegenstand die Aufgabe zugrunde, eine Netzersatzanlage zur Verfügung zu stellen, welche unter Berücksichtigung von lokalen Einspeisern einen sicheren Betrieb des Inselnetzes ermöglicht.

Diese Aufgabe wird gegenständlich durch eine Netzersatzanlage nach Anspruch 1, einen Umrichter nach Anspruch 8 sowie ein Verfahren nach Anspruch 9 gelöst.

Die Erfinder haben erkannt, dass der Betrieb einer Netzersatzanlage allein mit einem Dieselmotor oder einem sonstigen fossilbetriebenen Motor insofern problematisch ist, als dass dieser aus dem versorgten Netz rückgespeiste elektrische Leistung nicht aufnehmen kann. Durch die zunehmende Verbreitung von elektrischen Einspeisern im Energieversorgungsnetz ist dies jedoch wahrscheinlich und führt zu der oben geschilderten, nachteiligen Vorgehensweise.

Gegenständlich wird nun als elektrische Energiequelle ein elektrischer / elektrochemischer Energiespeicher zur Verfügung gestellt, welcher beispielsweise in Form von Batterien gebildet sein kann. Insbesondere haben sich hierbei Redox-Flow-Batterien als vorteilhaft gezeigt. Andererseits sind jedoch auch andere Batterietypen, wie beispielsweise Lithium-Ionen-Batterien denkbar. Der Energiespeicher kann beispielsweise auch als Pumpspeicher, Druckspeicher oder dergleichen gebildet sein.

Die gegenständliche Netzersatzanlage ist mit einem Anschluss an ein elektrisches Energieversorgungsnetz angeschlossen. Der Anschluss ist vorzugsweise mehrphasig, so dass jede einzelne Phase, der Nullleiter als auch der Erdleiter des elektrischen Energieversorgungsnetzes über den Anschluss mit der Netzersatzanlage verbunden ist.

In der Netzersatzanlage ist ein Energiespeicher vorgesehen, der zum Austausch elektrischer Leistung mit dem Energieversorgungsnetz gebildet ist. Der Energiespeicher kann dabei geladen und entladen werden. Der Energiespeicher ist vorzugsweise für eine Vielzahl von Ladezyklen, insbesondere mehr als 1000 Ladezyklen gebildet. Der Energiespeicher hat dabei eine Ladungskapazität von vorzugsweise mehr als 50kWh, insbesondere mehr als 100kWh.

Schließlich verfügt die Netzanlage über einen Umrichter. Ein Umrichter im Sinne des Gegenstandes kann eine Einrichtung sein, die einerseits als Wechselrichter fungiert, nämlich ausgehend von dem Energiespeicher in Richtung des elektrischen Energieversorgungsnetzes bzw. des Anschlusses und andererseits als Gleichrichter, nämlich ausgehend von dem Energieversorgungsnetz bzw. dem Anschluss in Richtung des Energiespeichers. Der Energiespeicher wird mit Gleichspannung betrieben. Über den Umrichter erfolgt ein Umrichten der Gleichspannung auf Seiten des Energiespeichers in eine Wechselspannung auf Seiten des Energieversorgungsnetzes und umgekehrt. Der Umrichter ist in Richtung des Anschlusses als netzbildender Wechselrichter geformt. Ein solcher netzbildender Wechselrichter kann eine Frequenz in das angeschlossene Netz einprägen. Ein netzbildender Wechselrichter kann somit eine Synchronmaschine emulieren.

Der Energiespeicher ist in der Lage, elektrische Energie, die von elektrischen Erzeugern des Energieversorgungsnetzes im Inselbetrieb rückgespeist wird, aufzunehmen. Insbesondere wenn die Leistung der Einspeiser in dem Inselnetz größer ist, als die Leistung der Lasten, kommt es zu einem Leistungsfluss von dem Energieversorgungsnetz in den Energiespeicher. Der Energiespeicher nimmt dabei die elektrische Energie auf und kann sie zu einem späteren Zeitpunkt über den Umrichter wieder in das Energieversorgungsnetz einspeisen. Dies kann der Fall sein, wenn die elektrische Leistung der elektrischen Lasten in dem Energieversorgungsnetz die elektrische Leistung der Einspeiser in dem Energieversorgungsnetz übersteigt. Das Energieversorgungsnetz wird dabei als Inselnetz betrieben und ist vom Energieversorgungsnetz des Energieversorgungsunternehmens getrennt. Die Netzersatzanlage läuft somit autark und kann auch elektrische Energie von elektrischen Einspeisern, die an dem Inselnetz angeschlossen sind, nutzen.

Nun kann es jedoch dazu kommen, dass der Ladezustand des Energiespeichers über ein Grenzwert steigt, insbesondere dass der Ladezustand beispielsweise über einen Wert von 80% des maximalen Ladezustands steigt. Um zu verhindern, dass der Energiespeicher überladen wird und um gleichzeitig auch noch eine ausreichende Restspeicherkapazität zur Verfügung zu stellen, um z.B. im Fall des Wiederanschlusses des Inselnetzes an das übergeordnete Energieversorgungsnetzes Bremsenergie aufnehmen zu können, sollte der Energiespeicher nicht vollständig geladen sein.

Es wird vorgeschlagen, dass der Umrichter über den Anschluss eine zumindest teilweise vom Ladezustand des Energiespeichers abhängige Netzfrequenz in das Energieversorgungsnetz einprägt. Durch die Abhängigkeit der eingeprägten Netzfrequenz von dem Ladezustand des Energiespeichers nutzt die gegenständliche Netzersatzanlage bzw. der gegenständliche Umrichter die Einspeisekennlinie der elektrischen Einspeiser in dem Energieversorgungsnetz aus.

Wie zuvor erläutert, haben die elektrischen Einspeiser eine Einspeisekennlinie, bei welcher die Einspeiseleistung (P) frequenzabhängig (P(f)) ist. Wie zuvor ebenfalls erläutert, kann die Einspeisekennlinie derart sein, dass bei steigender Frequenz über einer Normfrequenz die Einspeiseleistung reduziert wird, bis sie vollständig abgeschaltet wird. Diese Kennlinie wird somit gegenständlich ausgenutzt, um ein Überladen des Energiespeichers zu verhindern. Durch Messen des Ladezustands des Energiespeichers kann dieser ausgewertet werden und abhängig von der Auswertung kann ein Stellsignal für den Umrichter generiert werden, mit dessen Hilfe die eingeprägte Frequenz variiert wird.

Wie bereits erläutert, werden Energieversorgungsnetze in unterschiedlichen Regionen mit unterschiedlichen Frequenzen betrieben. Im europäischen Verbundnetz ist die Normfrequenz 50 Hz, im US-amerikanischen Netz ist diese beispielsweise 60 Hz. Die Netzersatzanlage ist so gestaltet, dass der Umrichter die Netzfrequenz zumindest teilweise mit einer Normfrequenz einprägt. Über einen weiten Betriebsbereich des Energiespeichers wird der Umrichter eine Normfrequenz in das Energieversorgungsnetz einprägen.

Eine Abweichung der eingeprägten Frequenz von der Normfrequenz ist dann angezeigt, wenn der Ladezustand des Energiespeichers einen oberen Grenzwert erreicht. Außerdem ist eine Reduzierung der eingeprägten Frequenz unter die Normfrequenz angezeigt, wenn der Ladezustand des Energiespeichers einen unteren Grenzwert erreicht und vorzugsweise wenn Energiespeicher und/oder gedrosselte Einspeiser im versorgten Netz vorhanden sind, die ihre Einspeiseleistung erhöhen können.

Wie bereits erläutert, wird gemäß der Erfindung vorgeschlagen, dass der Umrichter die Netzfrequenz beim Erreichen eines oberen Grenzwertes des Ladezustands des Energiespeichers über eine Normfrequenz anhebt. Der obere Grenzwert liegt vorzugsweise im Bereich um die 80% des Ladezustands, ist insbesondere 80% des maximalen Ladezustands des Energiespeichers. Der obere Grenzwert ist vorzugsweise kleiner als der maximale Ladezustand des Energiespeichers. Dies hat den Vorteil, dass in dem Energiespeicher noch ausreichend Energie gespeichert werden kann, um bei der Resynchronisation des Inselnetzes mit dem übergeordneten Versorgungsnetz Bremsenergie aufnehmen zu können. Dies ist beispielsweise dann notwendig, wenn die Frequenz des Inselnetzes höher ist, als die Frequenz des übergeordneten Versorgungsnetzes und die Frequenz des Inselnetzes abgesenkt werden muss.

Auch wird vorgeschlagen, dass der Umrichter die Netzfrequenz abhängig von einem Leistungsfluss zwischen dem Anschluss und dem Energiespeicher in das Energieversorgungsnetz einstellt. So kann beispielsweise die Netzfrequenz sowohl abhängig von dem Leistungsfluss als auch abhängig von dem Ladezustand eingestellt werden.

Die von dem Umrichter eingeprägte Netzfrequenz folgt einer Kennlinie, deren Arbeitspunkt abhängig vom Ladezustand und oder vom Leistungsfluss sein kann. Die Normfrequenz ist vorzugsweise in einem Frequenzband um die Mittenfrequenz. Das Frequenzband hat vorzugsweise eine Breite von bis zu 1% der Mittenfrequenz, insbesondere bis zu 0,5% der Mittenfrequenz und ist durch eine obere Bandgrenze und eine untere Bandgrenze begrenzt. Ausgehend von einer oberen Bandgrenze, kann die Frequenz bis zu einer oberen Grenzfrequenz angehoben werden. Die obere Bandgrenze ist vorzugsweise so gewählt, dass diese mit der Frequenz übereinstimmt, bei der die elektrischen Einspeiser ihre Leistung reduzieren. Die obere Grenzfrequenz kann beispielsweise diejenige Frequenz sein, bei der die elektrischen Einspeiser abgeschaltet werden. Zwischen diesen beiden Frequenzen wird der Arbeitspunkt eingestellt. Der Umrichter wird solange den Arbeitspunkt in Richtung höherer Frequenzen verschieben, bis vorzugsweise ein Leistungsfluss zwischen dem Anschluss und dem Energiespeicher einen unteren Grenzwert unterschreitet. Insbesondere bis der Leistungsfluss gleich 0 W ist. Dabei wird die Frequenz vorzugsweise nicht über die obere Grenzfrequenz angehoben, da dies zu einer Fehlfunktion innerhalb des Netzes führen könnte.

Die oben beschriebenen Schritte A) bis C) zum Betrieb der Netzersatzanlage werden vorzugsweise auch bei der gegenständlichen Netzersatzanlage durchgeführt. Nach der Synchronisation erfolgt ein Abschalten der Versorgung des Inselnetzes aus dem übergeordneten Netz. Um dieses Abschalten zu ermöglichen, wird vorgeschlagen, dass der Umrichter zur Synchronisation mit dem Energieversorgungsnetz eingerichtet ist und insbesondere, dass der Umrichter zur Ausgabe eines Trennungssignals bei einer erreichten Synchronisation eingerichtet ist. Mit Hilfe des Trennungssignals kann die Trennung des übergeordneten Netzes von dem Inselnetz erfolgen.

Der Betrieb von Inselnetzen kann zu Wartungszwecken notwendig werden. Um die gegenständliche Netzersatzanlage flexibel einsetzen zu können, wird vorgeschlagen, dass der Umrichter und der Energiespeicher in einem gemeinsamen Gehäuse angeordnet sind. Das Gehäuse ist dabei mobil. Insbesondere kann das Gehäuse ein Normcontainer sein.

Wie erläutert, wird bei Erreichen der oberen Grenzfrequenz ein Abschalten der elektrischen Einspeiser bewirkt. Die Betriebskennlinie der Einspeiser ist jedoch derart, dass die Einspeiser abgeschaltet bleiben, auch wenn die Frequenz auf einen Wert gleich oder größer als die obere Grenzfrequenz absinkt. Die Einspeiser haben dabei eine Betriebskennlinie, die hystereseförmig, vorzugsweise gemäß einer Doppelhysterese ist.

Nachdem aufgrund eines Erreichens eines oberen Grenzwertes des Ladezustands des Energiespeichers die Netzfrequenz bis zu dem oberen Grenzwert angehoben wurde, sind die in dem Inselnetz betriebenen elektrischen Einspeiser abgeschaltet bzw. aufgrund der Überfrequenz gedrosselt. Anschließend kann die Netzfrequenz bis in das Frequenzband der Normfrequenz, vorzugsweise bis zum oberen Frequenzband abgesenkt werden. Die Einspeiser bleiben dabei jedoch weiterhin abgeschaltet. Dies kann dazu führen, dass sich der Energiespeicher entlädt. Wenn dies der Fall ist, sollte frühzeitig ein Laden des Energiespeichers ermöglicht werden, insbesondere durch das Wiedereinschalten der elektrischen Erzeuger in dem Inselnetz. Dies ist beispielsweise dann notwendig, wenn der Ladezustand einen unteren Grenzwert erreicht, beispielsweise 20% des maximalen Ladezustands. Dann kann es sinnvoll sein, die Frequenz unter die obere Grenze des Frequenzbandes abzusenken. Sollte diese Maßnahme nicht ausreichen, um die Entladung des Energiespeichers zu beenden oder sogar das Wiederaufladen zu ermöglichen, sollte die Frequenz weiter abgesenkt werden, insbesondere unter die untere Bandgrenze. Dies führt dazu, dass Speicher und/oder Einspeiser, die aufgrund der Vorgabe des Betreibers gedrosselt betrieben werden, ihre Einspeisung auf einen Wert abhängig von der Frequenzabweichung erhöhen.

Ein weiterer Aspekt ist ein Umrichter für eine Netzanlage. Ein solcher Umrichter kann mit einer hier beschriebenen Netzanlage betrieben werden. Der Umrichter verfügt über einen Anschluss an ein elektrisches Energieversorgungsnetz. Darüber hinaus verfügt der Umrichter über einen Anschluss an einen Energiespeicher.

Der Umrichter ist vorzugsweise Wechselrichter und Gleichrichter in einem. Auf der einen Seite ist der Umrichter vorzugsweise als Wechselrichter eingerichtet, um elektrische Leistung in das elektrische Energieversorgungsnetz von einem Energiespeicher einzuspeisen. Hierbei wird die elektrische Leistung mit der Netzfrequenz des Energieversorgungsnetzes in das Energieversorgungsnetz eingespeist. Bei einem umgekehrten Leistungsfluss, von dem Energieversorgungsnetz zu dem Energiespeicher, wirkt der Umrichter als Gleichrichter und gibt an seinem Anschluss für den Energiespeicher eine Gleichspannung aus. Der Umrichter ist an dem Anschluss für das elektrische Energieversorgungsnetz mit einer Wechselspannung betrieben.

Des Weiteren ist der Umrichter elektrisch zwischen dem Anschluss an das elektrische Energieversorgungsnetz und dem Anschluss an den Energiespeicher angeordnet. Der Umrichter leitet Leistungsflüsse von dem Energieversorgungsnetz in den Energiespeicher und umgekehrt. Bei einer Rückspeisung aus dem Energieversorgungsnetz ist der elektrische Leistungsfluss von dem Energieversorgungsnetz in Richtung des Energiespeichers. Bei einer Versorgung des Energieversorgungsnetzes durch den Energiespeicher ist der Leistungsfluss von dem Energiespeicher in Richtung des Energieversorgungsnetzes. Es versteht sich, dass die Leistungsflussrichtung abhängig von der gewählten Zählpfeilrichtung ist.

Um elektrische Einspeiser innerhalb des Energieversorgungsnetzes abhängig von dem Ladezustand des Energiespeichers betreiben zu können, wird nunmehr vorgeschlagen, dass der Umrichter über den Anschluss eine zumindest in Teilen vom Ladezustand des Energiespeichers abhängige Netzfrequenz in das Energieversorgungsnetz einprägt. Wie erläutert, haben die Erfinder erkannt, dass durch eine entsprechende Einstellung des Umrichters die Leistungskennlinie der Einspeiser genutzt werden kann. Die Einspeiser haben eine P(f)-Kennlinie. Hierbei vollziehen die Einspeiser vorzugsweise in einem Frequenzbereich oberhalb der Normfrequenz eine Absenkung der Ausgangsleistung, welche insbesondere folgender Formel folgt:

$$\Delta P = 20 P_M \frac{50{,}2\,\mathrm{Hz} - f_{Netz}}{50\,\mathrm{Hz}} \quad \text{bei } 50{,}2\ \mathrm{Hz} \leq f_{Netz} \leq 51{,}5\ \mathrm{Hz}$$

Die Einspeiser sind darüber hinaus so eingerichtet, dass bei Erreichen der oberen Grenzfrequenz, beispielsweise 3% über der Normfrequenz, z.B. 51,5 Hz, die Einspeiseleistung gleich 0 W wird und zunächst auch bei einem Absinken der Frequenz innerhalb des Energieversorgungsnetzes die Leistung zunächst bei 0 W verbleibt.

Durch Einstellen des Arbeitspunktes auf der Kennlinie aller elektrischen Einspeiser innerhalb eines Inselnetzes ist es möglich, die Rückspeisung in den Energiespeicher der Netzersatzanlage über den Umrichter zu regeln, insbesondere auf 0W zu reduzieren.

Ein weiterer Aspekt ist ein Verfahren zum Betreiben einer Netzersatzanlage mit einem Energiespeicher und einem Umrichter. Die Netzersatzanlage als auch der Umrichter können entsprechend der hier beschriebenen Netzersatzanlage und des hier beschriebenen Umrichters eingerichtet sein.

Das gegenständliche Verfahren zeichnet sich dadurch aus, dass ein Ladezustand des Energiespeichers gemessen wird. Hierbei kann insbesondere die Spannung über den Polen des Energiespeichers, der Strom und die Temperatur des Energiespeichers gemessen werden. Hieraus lässt sich bereits ein Ladezustand des Energiespeichers, der auch State of Charge (SOC) genannt wird, ableiten. Neben Strom, Spannung und Temperatur können beispielsweise auch eine Anzahl von Ladezyklen, eine Temperatur zumindest einer Zelle des Batteriespeichers, die Außentemperatur oder dergleichen genutzt werden, um den Ladezustand möglichst genau bestimmen zu können.

Das gegenständliche Verfahren zeichnet sich ferner dadurch aus, dass mit Hilfe des Umrichters die Ausgangsfrequenz eingestellt wird. Der Umrichter dient zur Einprägung einer Netzfrequenz eines über den Umrichter gespeisten Energieversorgungsnetzes. Im Falle des Trennens des Energieversorgungsnetzes von dem Netz des Energieversorgers ist das Energieversorgungsnetz als Inselnetz betrieben. In diesem Fall kann der Umrichter die Frequenz des Inselnetzes bestimmen. Dies erfolgt durch das Einprägen der Frequenz über den Umrichter.

Um das Ladeverhalten bzw. die Leistungsflüsse von dem Energiespeicher in das Energieversorgungsnetz und insbesondere aus dem Energieversorgungsnetz in Richtung des Energiespeichers beeinflussen zu können, wird nunmehr vorgeschlagen, dass eine zumindest in Teilen vom gemessenen Ladezustand des Energiespeichers abhängige Netzfrequenz in das Energieversorgungsnetz eingeprägt wird.

Im Normalbetrieb wird die eingeprägte Frequenz Normfrequenz innerhalb eines Frequenzbandes sein, dass um eine Mittenfrequenz herum liegt. Insbesondere in Europa ist dieses Frequenzband zwischen 49,8 Hz und 50,2 Hz.

Innerhalb dieses Bereiches wird die Frequenz im Normalbetrieb aufgeprägt. Dieses Frequenzband kann auch als Normfrequenz bezeichnet werden. Mit Hilfe des Umrichters ist es jedoch auch möglich, die eingeprägte Frequenz über die obere Bandgrenze hinaus zu erhöhen oder unter die untere Bandgrenze hinaus abzusenken. Die Bandgrenzen liegen vorzugsweise in einem Bereich von weniger als 1% um die Mittenfrequenz vorzugsweise um weniger als 0,5% um die Mittenfrequenz.

In einem Inselbetrieb kann es dazu kommen, dass die eingespeiste elektrische Leistung größer ist, als die durch die Lasten benötigte elektrische Leistung. Dann wird die überschüssige elektrische Energie von dem Energiespeicher aufgenommen. Der Energiespeicher sollte jedoch nicht vollständig geladen werden. Da im Falle einer Resynchronisation des Inselnetzes mit dem Energieversorgungsnetz des Energieversorgers gegebenenfalls die Frequenz im Inselnetz abgesenkt werden muss, muss noch Bremsenergie durch den Energiespeicher ausgenommen werden können.

Dies führt dazu, dass der Energiespeicher im Zweifel nur bis zu einem oberen Grenzwert, beispielsweise 80% des maximalen Ladezustands geladen werden darf. Aus diesem Grunde wird vorgeschlagen, dass die eingeprägte Netzfrequenz solange eine Normfrequenz ist, bis der Ladezustand einen oberen Grenzwert erreicht hat. Anschließend wird die eingeprägte Netzfrequenz über die Normfrequenz angehoben. Durch das Anheben über die Normfrequenz bzw. über die obere Grenze des Frequenzbandes der Normfrequenz wird erreicht, dass an das Energieversorgungsnetz angeschlossene elektrische Einspeiser gedrosselt werden. Wie erwähnt, wird somit die P(f)-Kennlinie der Einspeiser genutzt.

Der Leistungsfluss zwischen dem Energiespeicher und dem Energieversorgungsnetz kann gemessen werden. Somit ist es beispielsweise möglich, im Falle des Erreichens des oberen Grenzwertes des Ladezustands des Energiespeichers den Leistungsfluss zwischen dem Energieversorgungsnetz und dem Energiespeicher auf null herunterzufahren. Aus diesem Grunde wird vorgeschlagen, dass die eingeprägte Netzfrequenz abhängig von dem gemessenen Leistungsfluss über die Normfrequenz angehoben wird, insbesondere dass die Netzfrequenz solange angehoben wird, bis der Leistungsfluss einen unteren Grenzwert unterschreitet.

Die Kennlinie der elektrischen Einspeiser führt dazu, dass diese bei einer Frequenz von 51,5 Hz in Europa, also 3% höher als die Mittenfrequenz, abschalten. Sobald es zu der Abschaltung gekommen ist, ist der Leistungsfluss durch die Einspeiser zwingend zumindest zu 0 W reduziert worden. In diesem Fall blieben die elektrischen Einspeiser solange ausgeschaltet, bis die Frequenz unter die untere Grenze des Frequenzbandes der Normfrequenz abgesenkt wird.

Wie bereits erwähnt, nutzt die Erfindung die Kennlinie der elektrischen Einspeiser aus. Es wird vorgeschlagen, dass mit Hilfe der eingeprägten Netzfrequenz der Arbeitspunkt von an dem Energieversorgungsnetz angeschlossenen Einspeisern derart beeinflusst wird, dass deren eingespeiste Leistung abhängig von der Netzfrequenz reduziert wird. Es wird auch vorgeschlagen, dass die eingespeiste Leistung abhängig von der Netzfrequenz erhöht wird. Insbesondere nachdem die Einspeiser abgeschaltet wurden, ist ein Absenken der Netzfrequenz unterhalb der oberen Bandgrenze der Normfrequenz dafür verantwortlich, dass die Einspeiser ihren Betrieb wieder aufnehmen und elektrische Leistung in das Energieversorgungsnetz einspeisen. Ein weiteres Absinken der Frequenz auf einen Wert unterhalb der unteren Bandgrenze führt dazu, dass Einspeiser und/oder Speicher, die aufgrund von Betreibervorgaben gedrosselt betrieben werden, ihre Einspeiseleistung erhöhen. Dies kann dann sinnvoll sein, wenn der Energiespeicher einen unteren Grenzwert des Ladezustands erreicht hat und ein Laden notwendig wird. Dies insbesondere dann, wenn zuvor der obere Grenzwert der Netzfrequenz erreicht wurde und somit die Einspeiser ausgeschaltet wurden.

Um ein Inselnetz betreiben zu können, muss der Umrichter in dem Inselnetz zunächst auf das Ortsnetz synchronisiert sein. Das Ortsnetz ist in der Regel ein Niederspannungsnetz, kann jedoch beispielsweise auch ein Mittelspannungsnetz sein. Nach einer erfolgten Synchronisation wird das mit der Netzersatzanlage betriebene Energieversorgungsnetz von dem übergeordneten Netz getrennt. Anschließend erfolgt die Leistungseinspeisung in das Energieversorgungsnetz unabhängig von dem übergeordneten Netz über den Energiespeicher und den Umrichter.

Nach einer erfolgreichen Synchronisation und Trennung des Energieversorgungsnetzes ist dieses als Inselnetz betrieben. Es wird vorgeschlagen, dass in diesem Zustand zunächst die eingeprägte Frequenz die Normfrequenz bzw. das Band der Normfrequenz ist. Der Umrichter ist so eingerichtet, dass er nach einer Trennung des Energieversorgungsnetzes von dem Ortsnetz zunächst eine Normfrequenz ist das Energieversorgungsnetz einprägt.

Nachfolgend wird der Gegenstand anhand einer Ausführungsbeispiele zeigenden Zeichnung näher erläutert. In der Zeichnung zeigen:

Fig. 1    ein beispielhaftes Energieversorgungsnetz mit einer Netzersatzanlage;

Fig. 2    einen Anschluss einer Netzersatzanlage an ein Energieversorgungsnetz;

Fig. 3    eine P(f)-Kennlinie eines elektrischen Einspeisers;

Fig. 4    eine Kennlinie zum Betrieb des Umrichters;

Fig. 5     ein Verfahren zum Betrieb der Netzersatzanlage;

Fig. 6     ein Ablauf eines Verfahrens zum Anheben der Frequenz innerhalb der Netzersatzanlage;

Fig. 7     ein Verfahren zum Absenken der Frequenz innerhalb der Netzersatzanlage.

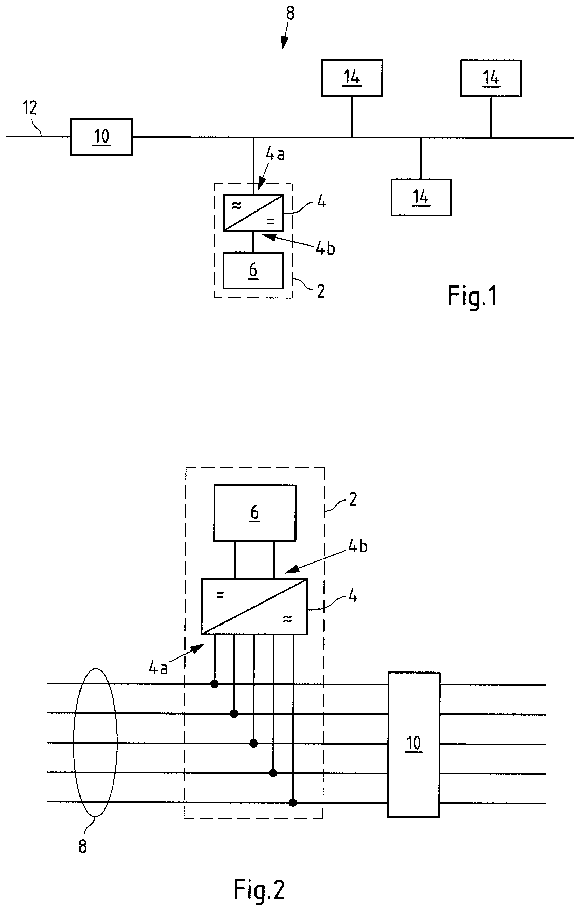

Fig. 1 zeigt eine Netzersatzanlage 2 mit einem Umrichter 4 und zumindest einem Energiespeicher 6. Der Umrichter 4 hat einen Anschluss 4a zum Anschluss an ein Energieversorgungsnetz sowie einen Anschuss 4b zum Anschluss an den Energiespeicher 6.

Der Energiespeicher 6 kann als Batterie gebildet sein. Es sei angemerkt, dass der Energiespeicher 6 zusätzlich beispielsweise noch einen mechanisch betriebenen, treibstoffbetriebenen Generator aufweisen kann, um im Falle eines niedrigen Ladezustands der in dem Energiespeicher verbauten Batterie die Netzersatzanlage 2 bzw. das daran betriebene Inselnetz weiter betreiben zu können. Insbesondere kann der Energiespeicher 6 um einen herkömmlichen Dieselgenerator oder eine Brennstoffzelle ergänzt sein, so dass der Betrieb der Netzersatzanlage 2 über einen längeren Zeitraum möglich ist, auch wenn die Batterien des Energiespeichers 6 bereits entladen sind.

Das Energieversorgungsnetz 8 ist über eine Trennvorrichtung 10 mit einem Versorgungsnetz 12 eines Energieversorgungsunternehmens verbunden. Beispielsweise kann die Trennvorrichtung 10 in einem Ortsnetztransformator verbaut sein und das Versorgungsnetz 12 kann ein Mittelspannungsnetz sein. Auch ist es möglich, dass das Versorgungsnetz 12 ein Niederspannungsnetz ist und die Trennvorrichtung 10 innerhalb des Niederspannungsnetzes vorgesehen ist.

In dem Energieversorgungsnetz 8 sind verschiedene Teilnehmer 14 angeschlossen. Die Teilnehmer 14 können als elektrische Last und teilweise auch als elektrische Einspeiser fungieren. Insbesondere Teilnehmer 14, die über eine Biomasseanlage, eine Kraftwärmekopplungsanlage, eine Fotovoltaikanlage, eine Wasserkraftanlage, eine Windkraftanlage oder dergleichen verfügen, können elektrische Leistung in das Energieversorgungsnetz 8 einspeisen.

Es kann dazu kommen, dass das Energieversorgungsnetz 8 als Inselnetz betrieben wird. Dies kann dadurch erreicht werden, dass über die Trennvorrichtung 10 das Energieversorgungsnetz 8 von dem Versorgungsnetz 12 abgekoppelt wird und anschließend durch den Energiespeicher 6 der Netzersatzanlage 2 gespeist wird.

Es versteht sich, dass die Netzersatzanlage 2, wie in Fig. 2 gezeigt, mehrphasig an das Energieversorgungsnetz 8 angeschlossen ist. Zu erkennen ist, dass der Umrichter 4 mit seinem Anschluss 4a dreiphasig an dem Energieversorgungsnetz 8 angeschlossen ist und zusätzlich über einen Nullleiter und einen Erdungsleiter an das Energieversorgungsnetz 8 angeschlossen ist. Ferner ist zu erkennen, dass der Umrichter 4 über seinen Anschluss 4b mit einem Gleichspannungsanschluss an den Energiespeicher 6 angeschlossen ist.

Im Falle eines Leistungsflusses von dem Energiespeicher 6 in Richtung des Energieversorgungsnetzes 8 fungiert der Umrichter 4 als Wechselrichter und prägt eine Netzfrequenz in das Energieversorgungsnetz 8 ein. Im Falle eines Leistungsflusses von dem Energieversorgungsnetz 8 zu dem Energiespeicher 6 fungiert der Umrichter als Gleichrichter und nimmt elektrische Leistung aus dem Energieversorgungsnetz 8 auf und speist damit den Energiespeicher 6, um diesen zu laden. Dabei prägt der Umrichter 6 vorzugsweise weiterhin die Netzfrequenz.

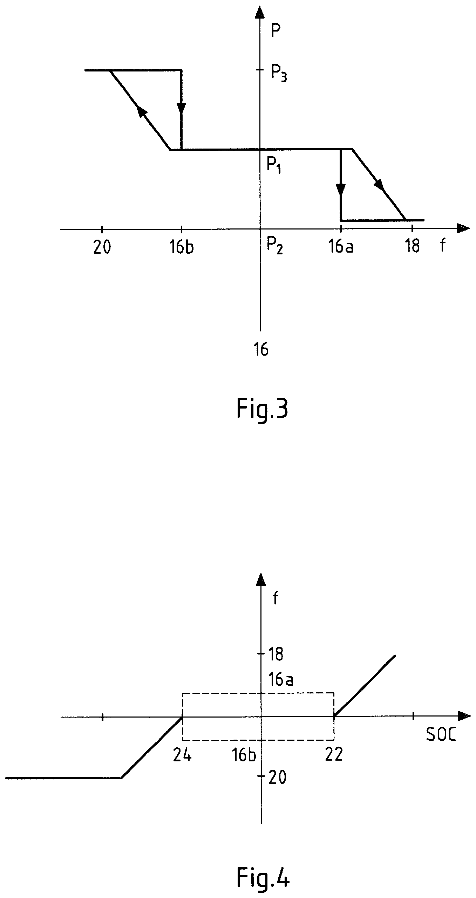

Ferner ist eine Wirkverbindung zwischen dem Umrichter 4 bzw. anderen Vorrichtungen innerhalb der Netzersatzanlage 2 und der Trennvorrichtung 10 vorgesehen, um ein Verkoppeln und Entkoppeln des Energieversorgungsnetzes 8 und dem Versorgungsnetz 12 zu ermöglichen. Die Netzersatzanlage wird derart betrieben, dass eine Betriebskennlinie P(f) der an den Teilnehmern 14 betriebenen Einspeisern genutzt wird. Eine solche Betriebskennlinie ist in der Fig. 3 dargestellt.

In der Fig. 3 ist zu erkennen, dass die Einspeiseleistung P abhängig von der Frequenz f ist. Hierbei ist zu erkennen, dass die Kennlinie einer Doppelhysterese folgt. In einem Frequenzband um eine Mittenfrequenz 16 herum, zwischen einer oberen Bandgrenze 16a und einer unteren Bandgrenze 16b, kann ein Einspeiser bei einer bestimmten Einspeiseleistung $P_1$ betrieben werden. Wird die Frequenz über die obere Bandgrenze 16a erhöht, so folgt die Einspeiseleistung der Kennlinie und wird reduziert. Diese Reduktion wird bis zu einer oberen Grenzfrequenz 18 durchgeführt und endet damit, dass die Leistung $P^2$ des Einspeisers zu 0 W reduziert wurde. Die obere Grenzfrequenz 18 ist mithin die maximale Frequenz, mit der ein Energieversorgungsnetz 8 sicher über einen längeren Zeitraum betrieben wird. Beim Absinken der Frequenz auf einen Wert kleiner der oberen Bandgrenze 16a wird die Leistungseinspeisung wieder freigegeben und der Einspeiser kann seine Leistung wieder auf bis zu $P_1$ erhöhen.

Wird die Frequenz unter die untere Bandgrenze 16b abgesenkt, so folgt die Einspeiseleistung der bis dahin gedrosselt betriebenen Generatoren und Speicher der Kennlinie und wird bis zu einer Leistung $P_3$ erhöht. Diese Erhöhung wird bis zu einer oberen Grenzfrequenz 20 durchgeführt und endet damit, dass die Leistung $P_3$ des Einspeisers auf den maximal möglichen Wert erhöht wurde. Die Einspeiseleistung folgt dabei der Kennlinie

$$\frac{\Delta P}{P_n} = \frac{(49,8Hz - f)}{50Hz} \cdot \frac{100\%}{s}\,mit\ s = 2\%$$

Die Bandgrenzen 16a, b liegen in einem Abstand von weniger als 1% vorzugsweise weniger als 0,5% von der Mittenfrequenz 16. Die obere und untere Frequenzgrenzen 18, 20 liegen in einem Abstand von in etwa zwischen 2 und 6%, vorzugsweise zwischen 3% und 5% von der Mittenfrequenz 16.

In Europa ist die Mittenfrequenz vorzugsweise 50 Hz, die obere Bandgrenze 16a 50,2 Hz und die untere Bandgrenze 16b 49,8 Hz.

Die obere Frequenzgrenze 18 liegt vorzugsweise bei 51,5 Hz und die untere Frequenzgrenze 20 liegt vorzugsweise bei 47,8 Hz. Der Arbeitspunkt des Einspeisers bewegt sich auf dieser Kennlinie. Mit Hilfe der von dem Umrichter 4 in das Energieversorgungsnetz 8 eingespeisten und aufgeprägten Frequenz ist es möglich, den Arbeitspunkt auf der Kennlinie der Einspeiser zu beeinflussen.

Die Kennlinie des Umrichters ist beispielhaft in der Fig. 4 dargestellt und zeigt eine Abhängigkeit der eingeprägten Frequenz f von dem Ladezustand SOC des Energiespeichers 6.

Zu erkennen ist, dass in einem Mittenbereich des Ladezustands SOC, beispielsweise zwischen einem oberen Grenzwert 22 und einem unteren Grenzwert 24 des Ladezustands, beispielsweise zwischen 80% und 20%, die Frequenz in einem Frequenzband um die Mittenfrequenz 16 herum eingestellt werden kann. Insbesondere ist die Frequenz auf die obere Bandgrenze 16a eingestellt, kann jedoch auch bis zur unteren Bandgrenze 16b eingestellt werden.

Erreicht der Ladezustand den oberen Grenzwert 22, so wird die Frequenz über die obere Bandgrenze 16a bis zur oberen Frequenzgrenze 18 angehoben. Ist die obere Grenzfrequenz 18 erreicht, sind alle Einspeiser abgeschaltet.

Wird ein unterer Grenzwert 24 des Ladezustands erreicht, so kann die Frequenz von der unteren Bandgrenze 16b ausgehend bis zur unteren Grenzfrequenz 20 abgesenkt werden. Durch das Absenken wird die Einspeiseleistung der Teilnehmer 14 erhöht und es wird versucht, den Ladezustand des Energiespeichers 16 zu verbessern.

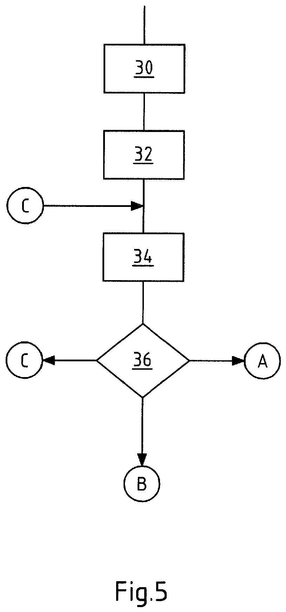

Die Netzersatzanlage 2 wird entsprechend einem in den Fig. 5 bis 7 beispielhaft gezeigten Verfahren betrieben. Einzelne Verfahrensschritte lassen sich auch unabhängig voneinander realisieren. Das Verfahren ist darüber hinaus nicht zwingend mit den beschriebenen Verfahrensschritten und deren Abfolge notwendig, sondern es können sich auch Abfolgen einzelner Verfahrensschritte ändern oder einzelne Verfahrensschritte können entfallen.

Zu Beginn des Betriebs der Netzersatzanlage 2 wird eine Synchronisation (30) zwischen dem Versorgungsnetz 12 und dem Energieversorgungsnetz 8 angestrebt. Hierzu wird der Umrichter 4 mit der Frequenz des Versorgungsnetzes 12 und des daran noch angeschlossenen Energieversorgungsnetzes 8 synchronisiert. Sobald eine Synchronisation erfolgt ist, wird ein entsprechendes Signal von dem Umrichter 4 ausgegeben und über die Wirkverbindung an die Trennvorrichtung 10 ausgegeben. Die Trennvorrichtung 10 bewirkt eine Trennung (32) des Versorgungsnetzes 12 von dem Energieversorgungsnetz 8. Gleichzeitig ist der Umrichter 4 mit dem Energieversorgungsnetz 8 verbunden.

Ab diesem Moment wird das Energieversorgungsnetz 8 durch den Energiespeicher 6 bzw. die Einspeiser an den Teilnehmern 14 gespeist. Der Umrichter 4 prägt über seinen Anschluss 4a eine Netzfrequenz in das Energieversorgungsnetz 8 ein (34). Die eingeprägte Frequenz 34 liegt zwischen den Bandgrenzen 16a, b und ist vorzugsweise nahe der Mittenfrequenz 16. Die eingeprägte Frequenz ist vorzugsweise an der oberen Bandgrenze 16a. Während des Betriebs wird überwacht (36), wie der Ladezustand des Energiespeichers 6 ist. Solange der Ladezustand des Energiespeichers zwischen den Grenzwerten 22, 24 ist, wird über den Schritt C das Frequenzband durch die Frequenzeinprägung (34) eingehalten. In dem Moment, in dem der Ladezustand 80% überschreitet, wird in Schritt A abgezweigt.

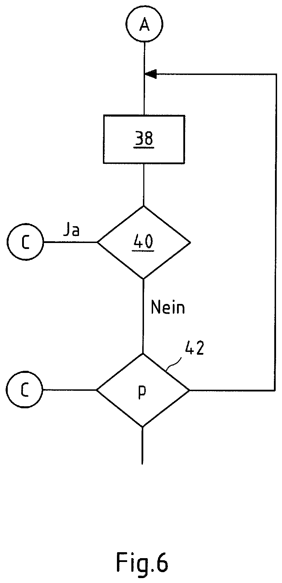

Fig. 6 zeigt den Schritt A. Durch das Ansteigen des Ladezustands über einen oberen Grenzwert 22, beispielsweise 80%, wird es notwendig, die eingespeiste Leistung der Teilnehmer zu reduzieren. Hierzu wird die Kennlinie gemäß der Fig. 3 ausgenutzt und die Frequenz wird über die Mittenfrequenz schrittweise angehoben (38). Das Anheben der Frequenz kann dabei beispielsweise stufenlos oder in Schritten von z.B. 0,1 Hz erfolgen. Anschließend wird überprüft (40), ob die obere Frequenzgrenze 18 erreicht ist. Ist dies nicht der Fall, wird überprüft (42), ob ein Leistungsfluss von dem Energieversorgungsnetz 8 in Richtung des Energiespeichers 6 gerichtet ist. In diesem Fall wird zu Schritt 38 verzweigt. Ist kein Leistungsfluss messbar oder ist die Richtung des Leistungsflusses von dem Energiespeicher 6 in Richtung des Energieversorgungsnetzes 8, wird in dem Schritt C abgezweigt.

Bei der Prüfung (40) der Frequenz wird bei Erreichen der oberen Frequenzgrenze 18 ebenfalls in Schritt C abgezweigt.

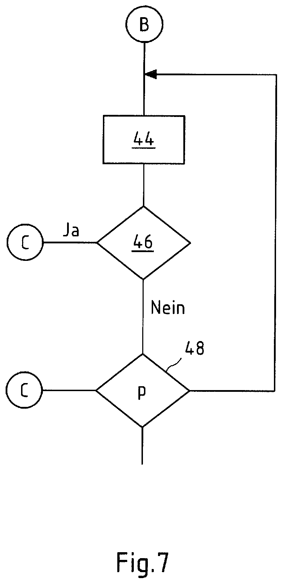

Wie in Fig. 5 dargestellt, wird bei der Überwachung 36 in dem Schritt B abgezweigt, wenn der Ladezustand des Energiespeichers 6 einen unteren Grenzwert 24 erreicht hat. Schritt B ist in Fig. 7 beispielhaft dargestellt.

Durch das Absinken des Ladezustands unter den unteren Grenzwert wird versucht, die Einspeiseleistung aller Teilnehmer 14 zu maximieren. Hierzu wird zunächst die aufgeprägte Frequenz abgesenkt (44). Das Absenken (44) kann in einer gleichen Schrittweite erfolgen, wie das Anheben (38).

Anschließend kann geprüft werden (46), ob die untere Frequenzgrenze 20 erreicht ist. Ist dies der Fall, wird in Schritt C abgezweigt. Anderenfalls, wird überprüft (48), ob ein Leistungsfluss von dem Energieversorgungsnetz in Richtung des Energiespeichers 6 gerichtet ist. Ist dies nicht der Fall, so wird zurück zu Schritt 44 verzweigt, anderenfalls wird in Schritt C abgezweigt.

Es versteht sich, dass beispielsweise bei der Abzweigung in Schritt (46) in Richtung Schritt C die Frequenz zunächst nicht wie in Fig. 5 dargestellt, in das Frequenzband um die Mittenfrequenz 16 angehoben werden muss. Dies würde zusätzliche Bremsenergie aus dem Energiespeicher 6 erfordern. Da der Energiespeicher 6 in diesem Fall bereits stark entladen ist und der Ladezustand den unteren Grenzwert 24 erreicht hat, kann auch die Frequenz im Bereich der unteren Frequenzgrenze gehalten werden, bis der Ladezustand einen weiteren Grenzwert überschritten hat.

Mit Hilfe des gezeigten Verfahrens kann die Netzersatzanlage unter Ausnutzung der Leistung aller Teilnehmer besonders effizient betrieben werden.

## Patentansprüche

1. Netzersatzanlage (2) mit

   - einem Anschluss (4a) an ein elektrisches Energieversorgungsnetz (8),
   - einem Energiespeicher (6), und
   - einem Umrichter (4), der zwischen dem Anschluss (4a) und dem Energiespeicher (6) angeordnet ist, wobei
   - der Umrichter (4) über den Anschluss (4a) eine zumindest teilweise vom Ladezustand des Energiespeichers (6) abhängige Netzfrequenz in das Energieversorgungsnetz (8) einprägt,
   **dadurch gekennzeichnet,**
   - **dass** der Umrichter (4) derart eingerichtet ist, dass die eingeprägte Netzfrequenz solange eine Normfrequenz ist, bis der Ladezustand einen oberen Grenzwert (22) erreicht und dass die eingeprägte Netzfrequenz anschließend über die Normfrequenz angehoben wird.

2. Netzersatzanlage (2) nach einem der vorangehenden Ansprüche,
   **dadurch gekennzeichnet,**

   - **dass** der Umrichter (4) die Netzfrequenz zumindest teilweise mit einer Normfrequenz einprägt.

3. Netzersatzanlage (2) nach Anspruch 1 oder 2,
   **dadurch gekennzeichnet,**

   - **dass** der Umrichter (4) die Netzfrequenz abhängig von einem Leistungsfluss zwischen dem Anschluss (4a) und dem Energiespeicher (6) in das Energieversorgungsnetz (8) einstellt.

4. Netzersatzanlage (2) nach einem der vorangehenden Ansprüche,
   **dadurch gekennzeichnet,**

   - **dass** der Umrichter (4) die Netzfrequenz solange anhebt, bis ein Leistungsfluss zwischen dem Anschluss (4a) und dem Energiespeicher (6) einen unteren Grenzwert (22) unterschreitet, insbesondere bis der Leistungsfluss gleich Null ist.

5. Netzersatzanlage (2) nach einem der vorangehenden Ansprüche,
   **dadurch gekennzeichnet,**

   - **dass** der Umrichter (4) zur Synchronisation mit dem Energieversorgungsnetz (8) eingerichtet ist, insbesondere dass der Umrichter (4) zur Ausgabe eines Trennungssignals bei einer erreichten Synchronisation eingerichtet ist.

6. Netzersatzanlage (2) nach einem der vorangehenden Ansprüche,
   **dadurch gekennzeichnet,**

   - **dass** der Umrichter (4) und der Energiespeicher (6) in einem gemeinsamen Gehäuse angeordnet sind und das Gehäuse mobil ist.

7. Netzersatzanlage (2) nach einem der vorangehenden Ansprüche,
   **dadurch gekennzeichnet,**

- **dass** der Umrichter (4) die Netzfrequenz beim Erreichen eines unteren Grenzwertes (22) des Ladezustands unter eine Normfrequenz absenkt.

8. Umrichter (4) für eine Netzersatzanlage (2) nach einem der vorangehenden Ansprüche, mit

   - einem Anschluss (4a) an ein elektrisches Energieversorgungsnetz (8),
   - einem Anschluss (4b) an einen Energiespeicher (6), wobei
   - der Umrichter (4) zwischen dem Anschluss (4a) an das elektrische Energieversorgungsnetz (8) und dem Anschluss (4b) an den Energiespeicher (6) angeordnet ist, und
   - der Umrichter (4) über den Anschluss (4a) eine zumindest in Teilen vom Ladezustand des Energiespeichers (6) abhängige Netzfrequenz in das Energieversorgungsnetz (8) einprägt, und derart eingerichtet ist, dass die eingeprägte Netzfrequenz solange eine Normfrequenz ist, bis der Ladezustand einen oberen Grenzwert (22) erreicht und dass die eingeprägte Netzfrequenz anschließend über die Normfrequenz angehoben wird.

9. Verfahren zum Betreiben einer Netzersatzanlage (2) mit einem Energiespeicher (6) und einem Umrichter (4) umfassend:

   - Messen eines Ladezustands des Energiespeichers (6) und
   - Einstellen einer Ausgangsfrequenz des Umrichters (4) zur Einprägung einer Netzfrequenz eines über den Umrichter (4) gespeisten Energieversorgungsnetzes (8),

   wobei
   eine zumindest in Teilen vom gemessenen Ladezustand des Energiespeichers (6) abhängige Netzfrequenz in das Energieversorgungsnetz (8) einprägt wird, **dadurch gekennzeichnet, dass**
   dass der Umrichter (4) derart eingerichtet ist, dass die eingeprägte Netzfrequenz solange eine Normfrequenz ist, bis der Ladezustand einen oberen Grenzwert (22) erreicht und dass die eingeprägte Netzfrequenz anschließend über die Normfrequenz angehoben wird.

10. Verfahren nach Anspruch 9,
    **dadurch gekennzeichnet,**

    - **dass** ein Leistungsfluss zwischen dem Energiespeicher (6) und dem Energieversorgungsnetz (8) gemessen wird und dass die eingeprägte Netzfrequenz abhängig von dem gemessenen Leistungsfluss über die Normfrequenz angehoben wird, insbesondere dass die Netzfrequenz solange angehoben wird, bis der Leistungsfluss einen unteren Grenzwert (22) unterschreitet.

11. Verfahren nach einem der vorangehenden Ansprüche,
    **dadurch gekennzeichnet,**

    - **dass** mit Hilfe der eingeprägten Netzfrequenz der Arbeitspunkt von an dem Energieversorgungsnetz (8) angeschlossenen Einspeisern derart beeinflusst wird, dass deren eingespeiste Leistung abhängig von der Netzfrequenz reduziert wird.

12. Verfahren nach einem der vorangehenden Ansprüche,
    **dadurch gekennzeichnet,**

    - **dass** das mit der Netzersatzanlage (2) betriebene Energieversorgungsnetz (8) nach einer Synchronisation mit einem Ortsnetz von dem Ortsnetz getrennt wird und elektrische Leistung in dem Energieversorgungsnetz (8) unabhängig von dem Ortsnetz verteilt wird.

13. Verfahren nach einem der vorangehenden Ansprüche,
    **dadurch gekennzeichnet,**

    - **dass** der Umrichter (4) nach einer Trennung des Energieversorgungsnetzes (8) von dem Ortsnetz zunächst eine Normfrequenz in das Energieversorgungsnetz (8) einprägt.

**Claims**

1. Emergency power system (2) with

   - a connection (4a) to an electrical power supply network (8),
   - an energy storage (6), and
   - a converter (4) which is arranged between the connection (4a) and the energy storage (6), wherein
   - the converter (4) applies to the power supply network (8), via the connection (4a), a mains frequency which is at least partially dependent on the state of charge of the energy storage (6),
   **characterized in that**
   - the converter (4) is arranged such that the applied mains frequency is a standard frequency until the state of charge reaches an upper limit value (22), and **in that** the applied mains frequency is then raised above the standard frequency.

2. Emergency power system (2) according to one of the preceding claims, **characterized in that**

   - the converter (4) at least partially applied the mains frequency with a standard frequency.

3. Emergency power system (2) according to claim 1 or 2, **characterized in that**

   - the converter (4) sets the mains frequency as a function of a power flow between the connection (4a) and the energy storage (6) into the power supply network (8).

4. Emergency power system (2) according to one of the preceding claims, **characterized in that**

   - the converter (4) raises the mains frequency until a power flow between the connection (4a) and the energy storage device (6) falls below a lower limit value (22), in particular until the power flow is equal to zero.

5. Emergency power system (2) according to one of the preceding claims, **characterized in that**

   - the converter (4) is arranged for synchronization with the power supply network (8), in particular **in that** the converter (4) is arranged for outputting a disconnection signal when synchronization is reached.

6. Emergency power system (2) according to one of the preceding claims, **characterized in that**

   - the converter (4) and the energy storage (6) are arranged in a common housing and the housing is mobile.

7. Emergency power system (2) according to one of the preceding claims, **characterized in that**

   - the converter (4) reduces the mains frequency below a standard frequency when a lower limit value (22) of the state of charge is reached.

8. Converter (4) for an emergency power system (2) according to one of the preceding claims, having

   - a connection (4a) to an electrical power supply network (8),
   - a connection (4b) to an energy storage (6), wherein
   - the converter (4) is arranged between the connection (4a) to the electrical power supply network (8) and the connection (4b) to the energy storage (6), and
   - the converter (4) applies a mains frequency, which is at least partially dependent on the state of charge of the energy storage (6), into the power supply network (8) via the connection (4a), and is arranged such that the applied mains frequency is a standard frequency until the state of charge reaches an upper limit value (22), and in such that the applied mains frequency is subsequently raised above the standard frequency.

9. Method of operating an emergency power system (2) with an energy storage device (6) and a converter (4) comprising:

   - measuring a state of charge of the energy storage (6); and
   - adjusting an output frequency of the converter (4) to apply a mains frequency of a power supply network (8) fed via the converter (4),
wherein
a mains frequency which is at least partially dependent on the measured state of charge of the energy storage (6) is applied into the energy supply network (8), **characterized in that** the converter (4) is arranged in such that the applied mains frequency is a standard frequency until the state of charge reaches an upper limit value (22), and **in that** the applied mains frequency is subsequently raised above the standard frequency.

10. Method according to claim 9,
**characterized in that**

- a power flow between the energy storage (6) and the power supply network (8) is measured, and **in that** the applied mains frequency is raised above the standard frequency as a function of the measured power flow, in particular **in that** the mains frequency is raised until the power flow falls below a lower limit value (22).

11. Method according to one of the preceding claims,
**characterized in that**

- the operating point of feeders connected to the power supply network (8) is influenced with the aid of the applied mains frequency such that their fed-in power is reduced as a function of the mains frequency.

12. Method according to one of the preceding claims,
**characterized in that**

- the power supply network (8) operated with the emergency power system (2) is disconnected from the local network after synchronization with a local network, and electrical power is distributed in the power supply network (8) independently of the local network.

13. Method according to one of the preceding claims,
**characterized in that**

- the converter (4) first applies a standard frequency into the power supply network (8) after a disconnection of the power supply network (8) from the local network.

**Revendications**

1. Système d'alimentation de secours (2) avec

- une connexion (4a) à un réseau d'alimentation en énergie électrique (8),
- un dispositif de stockage d'énergie (6), et
- un convertisseur (4) qui est arrangé entre la connexion (4a) et le dispositif de stockage d'énergie (6), où
- le convertisseur (4) impose une fréquence de réseau, qui dépend au moins partiellement de l'état de charge du dispositif de stockage d'énergie (6), au réseau d'alimentation en énergie électrique (8) via la connexion (4a),
**caractérisé en ce**
- **que** le convertisseur (4) est configuré de telle sorte que la fréquence de réseau imposée est une fréquence standard jusqu'à ce que l'état de charge atteigne une valeur limite supérieure (22), et que la fréquence du réseau imposée est ensuite augmentée au-dessus de la fréquence standard.

2. Système d'alimentation de secours (2) selon l'une des revendications précédentes,
**caractérisé en ce**

- **que** le convertisseur (4) impose la fréquence de réseau au moins partiellement avec une fréquence standard.

3. Système d'alimentation de secours (2) selon la revendication 1 ou 2,
**caractérisé en ce**

- **que** le convertisseur (4) ajuste la fréquence du réseau en fonction d'un flux de puissance entre la connexion (4a) et le dispositif de stockage d'énergie (6) dans le réseau d'alimentation en énergie électrique (8).

4. Système d'alimentation de secours (2) selon l'une des revendications précédentes, **caractérisé en ce**

- **que** le convertisseur (4) augmente la fréquence du réseau jusqu'à ce qu'un flux de puissance entre la connexion (4a) et le dispositif de stockage d'énergie (6) descende au-dessous d'une valeur limite inférieure (22), en particulier jusqu'à ce que le flux de puissance est égal à zéro.

5. Système d'alimentation de secours (2) selon l'une des revendications précédentes, **caractérisé en ce**

- **que** le convertisseur (4) est configuré pour une synchronisation avec le réseau d'alimentation en énergie électrique (8), en particulier que le convertisseur (4) est configuré pour émettre un signal de déconnexion lorsque la synchronisation est atteinte.

6. Système d'alimentation de secours (2) selon l'une des revendications précédentes, **caractérisé en ce**

- **que** le convertisseur (4) et le dispositif de stockage d'énergie (6) sont disposés dans un boîtier commun et le boîtier est mobile.

7. Système d'alimentation de secours (2) selon l'une des revendications précédentes, **caractérisé en ce**

- **que** le convertisseur (4) réduit la fréquence de réseau en dessous d'une fréquence standard lorsqu'une valeur limite inférieure (22) de l'état de charge est atteinte.

8. Convertisseur (4) pour un système d'alimentation de secours (2) selon l'une des revendications précédentes, avec

- une connexion (4a) à un réseau d'alimentation en énergie électrique (8),
- une connexion (4b) à un dispositif de stockage d'énergie (6), où
- le convertisseur (4) est arrangé entre la connexion (4a) au réseau d'alimentation en énergie électrique (8) et la connexion (4b) au dispositif de stockage d'énergie (6), et
- le convertisseur (4) impose au réseau d'alimentation en énergie électrique (8), par la connexion (4a), une fréquence de réseau qui dépend au moins en partie de l'état de charge du dispositif de stockage d'énergie (6), et est configuré de telle sorte que la fréquence de réseau imposée est une fréquence standard jusqu'à ce que l'état de charge atteigne une valeur limite supérieure (22), et de telle sorte que la fréquence de réseau imposée est ensuite augmentée au-dessus de la fréquence standard.

9. Procédé pour faire fonctionner un système d'alimentation de secours (2) avec un dispositif de stockage d'énergie (6) et un convertisseur (4) comprenant :

- mesurer un état de charge du dispositif de stockage d'énergie (6) ; et
- ajuster une fréquence de sortie du convertisseur (4) pour imprimer une fréquence de réseau d'un réseau d'alimentation en énergie électrique (8) alimenté via l'onduleur (4),
où
une fréquence de réseau, qui dépend au moins partiellement de l'état de charge mesuré du dispositif de stockage d'énergie (6), est imprimée dans le réseau d'alimentation en énergie électrique (8),
**caractérisé en ce**
**que** le convertisseur (4) est configuré de telle sorte que la fréquence de réseau imposée est une fréquence standard jusqu'à ce que l'état de charge atteigne une valeur limite supérieure (22), et que la fréquence de réseau imposée est ensuite augmentée au-dessus de la fréquence standard.

10. Procédé selon la revendication 9, **caractérisé en ce**

- **qu'**un flux de puissance entre le dispositif de stockage d'énergie (6) et le réseau d'alimentation en énergie électrique (8) est mesuré, et que la fréquence de réseau imposée est augmentée au-dessus de la fréquence standard dépendant du flux de puissance mesuré, en particulier que la fréquence de réseau est augmentée jusqu'à ce que le flux de puissance descend au-dessous une valeur limite inférieure (22).

11. Procédé selon l'une des revendications précédentes,
**caractérisé en ce**

- **que** le point de fonctionnement des dispositifs d'alimentation connectées au réseau d'alimentation en énergie électrique (8) est influencé à l'aide de la fréquence de réseau imposée de telle sorte que leur puissance injectée est réduite dépendant de la fréquence de réseau.

12. Procédé selon l'une des revendications précédentes,
**caractérisé en ce**

- **que** le réseau d'alimentation en énergie électrique (8) fonctionnant avec le système d'alimentation de secours (2) est déconnecté du réseau local après une synchronisation avec un réseau local, et de la puissance électrique est distribuée dans le réseau d'alimentation électrique (8) indépendamment du réseau local.

13. Procédé selon l'une quelconque des revendications précédentes,
**caractérisé en ce**

- **que** le convertisseur (4), après une séparation du réseau d'alimentation en énergie électrique (8) du réseau local, impose d'abord une fréquence standard dans le réseau d'alimentation en énergie électrique (8).

Fig.1

Fig.2

Fig.3

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015039802 A1
- EP 3096434 A1
- DE 102012023426 A1